(19) Europäisches Patentamt
European Patent Office
Office européen des brevets

(11) EP 2 192 705 A1

(12) EUROPEAN PATENT APPLICATION

(43) Date of publication:
02.06.2010 Bulletin 2010/22

(51) Int Cl.:
$H04B\ 10/155^{(2006.01)}$

(21) Application number: 09176996.8

(22) Date of filing: 25.11.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(30) Priority: 27.11.2008 JP 2008302568

(71) Applicant: Yokogawa Electric Corporation
Tokyo 180-8750 (JP)

(72) Inventors:
• Akasaka, Yasukazu
Musashino-shi Tokyo 180-8750 (JP)
• Asano, Tetsuri
Musashino-shi Tokyo 180-8750 (JP)
• Oguso, Masahiro
Musashino-shi Tokyo 180-8750 (JP)

(74) Representative: Grünecker, Kinkeldey,
Stockmair & Schwanhäusser
Anwaltssozietät
Leopoldstrasse 4
80802 München (DE)

(54) **Optical transmission apparatus**

(57) An optical transmission apparatus includes a Mach-Zehnder modulator, transmission lines which transmit modulation data to the Mach-Zehnder modulator, a phase varying section which is connected to at least one of the transmission lines, and a phase synchronization loop which is connected to the phase varying section, and which applies a control voltage on which a dither signal is superimposed to the phase varying section. The phase varying section adjusts a skew between the transmission lines to remain constant, based on the control voltage on which the dither signal is superimposed.

FIG. 1

EP 2 192 705 A1

**Description**

TECHNICAL FIELD

The present disclosure relates to an optical transmission apparatus, and more particularly to correction of a skew between data which, in a Mach-Zehnder modulator (hereinafter, referred to as an MZ modulator), are applied in order to phase-modulate light beams that are obtained by branching in an optical path in the MZ modulator.

RELATED ART

In the field of optical communication systems, as an optical modulation method which is suitable for a large capacity and a long transmission distance, practical application of phase modulation methods such as DPSK (Differential Phase Shift Keying) and DQPSK (Differential Quadrature Phase Shift Keying) have been studied.

In such an optical communication system, as an optical modulator which phase-modulates continuous light with binarized data, an MZ modulator is used as disclosed in, for example, Patent Reference 1. An MZ modulator is an optical intensity modulator which performs ON/OFF control of light under interference conditions in the case where light that has been once split is again combined with each other, and can change the interference conditions of the combination, by applying a voltage on an electrode disposed on an optical waveguide.

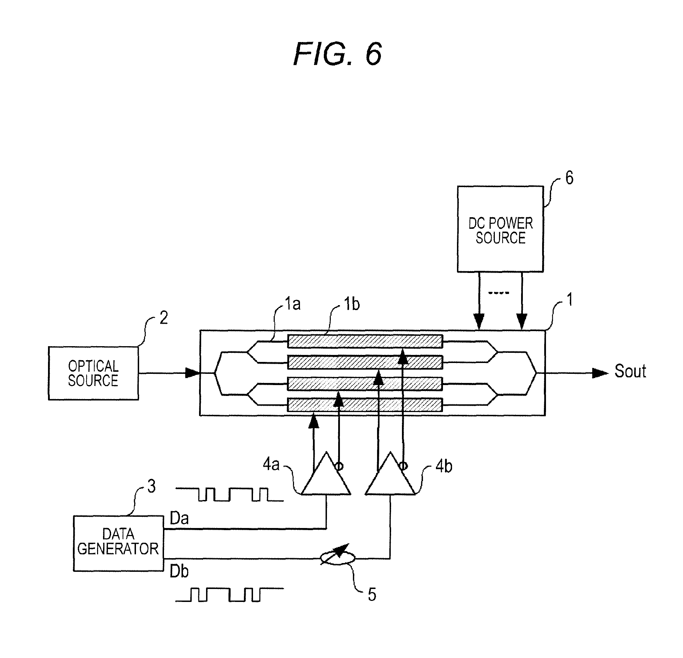

Fig. 6 is a block diagram showing an example of a related-art DQPSK optical transmitting apparatus using an MZ modulator. Referring to Fig. 6, in the MZ modulator 1, four branched optical waveguides 1a are formed, and electrodes 1b for applying data for modulation are formed on the upper faces of the optical waveguides 1a, respectively.

Continuous light from an optical source 2 is input into one ends of the optical waveguides 1a. While being split into four light beams, the continuous light is passed through the optical waveguides 1a, and then again combined with each other to be output from another end as a light signal Sout.

Two data Da, Db which are output from a data generator 3, and which have the same frequency and different data arrangements are amplified to respective adequate amplitude voltages by amplifiers 4a, 4b each of which is configured so as to output signals of two positive and negative polarities, and then input to the electrodes 1b formed on the upper faces of the optical waveguides 1a. The data Db are input into the amplifier 4b through a phase shifter 5 which is connected as phase varying section.

In order to adequately set the interference conditions of the combination, a DC power source 6 applies predetermined voltages to electrodes (not shown) which are formed on the optical waveguides 1a of the combining portion of the MZ modulator 1, respectively.

According to the configuration, the continuous light output from the optical source 2 is passed through the MZ modulator 1 to be output as the light signal Sout which is phase-modulated with the two data Da, Db output from the data generator 3.

In the thus configured optical transmission apparatus, when a skew is generated in data transmitted between the data generator 3 and the amplifiers 4a, 4b, or between the amplifiers 4a, 4b and the MZ modulator 1, the eye pattern for demodulation is closed, and "0" or "1" of data is hardly discriminated, so that the transmission quality is lowered, thereby causing transmission degradation. In the optical transmission apparatus of Fig. 6, therefore, the phase shifter 5 is connected to the line of the data Db to perform the skew adjustment.

Patent Reference 1 discloses the configuration of an optical device apparatus which uses an MZ modulator that can adequately control the phase shift, the DC drift, etc.

[Patent Reference 1] JP-A-2007-43638

Recently, a communication apparatus which is small, and in which the transmission rate is high is requested. As the transmission rate is higher, usually, electronic devices including a data generator which is a high-speed communication component consume a larger power.

Usually, the data generator 3 and the amplifiers 4a, 4b are connected with each other by a coaxial cable or the like. In a DQPSK optical transmission apparatus such as shown in Fig. 6, in the case of a small and high-speed communication apparatus, when the optical transmission apparatus is designed to be miniaturized so that the mounting density is high, the heat distribution is largely changed depending on the arrangement of the electronic devices, and the skew between the two data Da, Db is delicately varied.

In the case of a super high-speed signal of 100 Gbps, for example, it is assumed that the half period of one bit is 5 ps, devices are connected to each other by a cable having a length of 50 mm, the core wires of the coaxial cables are made of pure copper, and the temperature difference between the coaxial cables for the data Da, Db is 5°C. In this case, the skew between the data Da, Db is indicated by the following expression, the coaxial length difference is about 4 $\mu$m, and a skew of about 0.02 ps is generated,

$$L_{skew} = \alpha \bullet L_0 \bullet \Delta t$$

$\alpha$: coefficient of linear expansion (in the case of copper: $\alpha$ = 16.5e-6)
$L_0$: coaxial length
$\Delta t$: temperature difference

Furthermore, sometimes, the skew between the data Da, Db is varied by degradation with time of devices.

When focusing attention on the lengths of the cables which are used for transmitting the data Da, Db, production dispersion of about 1 mm is produced. In a super high-speed transmission system of, for example, 100 Gbps, the production dispersion exerts a large influence in view of influences such as transmission degradation.

When a skew due to such a temperature change, degradation with time of devices, or the like is changed, transmission quality degradation is caused as described above. Therefore, it is preferable that the state of a skew is always monitored by using any means, and, when a skew is generated, the skew is immediately adjusted.

A skew due to production dispersion of the cables must be eliminated in a stage of assembling and adjusting the optical transmission apparatus.

In the related-art configuration shown in Fig. 6, in the adjustment of the skews, for example, it is necessary that an instrument for observing an eye pattern is connected to the optical transmission apparatus, and the phase shifter 5 is adjusted on the basis of the demodulated eye pattern, or that the BERT (Bit Error Rate Test) is performed on the demodulated signal, and the phase shifter 5 is adjusted while checking the transmission quality. Therefore, there is a problem in that many work hours are required.

In an optical transmission apparatus which is being practically used, even when a skew due to a temperature change, degradation with time of devices, or the like is generated, it is difficult to immediately adjust the skew.

SUMMARY

Exemplary embodiments of the present invention provide an optical transmission apparatus in which a skew is always monitored, and, when a skew is generated, the skew can be immediately eliminated.

An optical transmission apparatus according to an exemplary embodiment of the invention, comprises:

    a Mach-Zehnder modulator;
    transmission lines which transmit modulation data to the Mach-Zehnder modulator;
    a phase varying section which is connected to at least one of the transmission lines; and
    a phase synchronization loop which is connected to the phase varying section, and which applies a control voltage on which a dither signal is superimposed to the phase varying section,
    wherein the phase varying section adjusts a skew between the transmission lines to remain constant, based on the control voltage on which the dither signal is superimposed.

The phase synchronization loop may have a dither generating source which generates a dither signal,
a mixer which multiples the dither signal output from the dither generating source with a signal that is phase-adjusted and photoelectrically converted,
a frequency detector which detects an arbitrary frequency band signal from an output signal from the mixer,
a controller which receives a synchronous detection output from the frequency detector, and which changes a control signal on the basis of a value which is synchronous-detected; and
an adder which adds the control voltage output from the controller, to the dither signal.

Phase varying sections may be connected respectively to the transmission lines.

A part of the phase synchronization loop may be formed by an FPGA or an ASIC.

The phase varying section may be controlled so that a synchronous-detected value is "0".

According to the configuration, it is possible to always monitor a skew, and, when a skew is generated between transmission lines, the skew can be immediately eliminated.

Other features and advantages may be apparent from the following detailed description, the accompanying drawings and the claims.

BRIEF DESCRIPTION OF THE DRAWINGS

    Fig. 1 is a block diagram showing an embodiment of the invention.
    Fig. 2 is a graph showing correlation between a skew between data and a synchronous detection output in the embodiment of the invention.
    Fig. 3 is a block diagram showing another embodiment of the invention.
    Fig. 4 is a block diagram showing a further embodiment of the invention.
    Fig. 5 is a block diagram showing a still further embodiment of the invention.
    Fig. 6 is a block diagram showing an example of a related-art configuration.

DETAILED DESCRIPTION

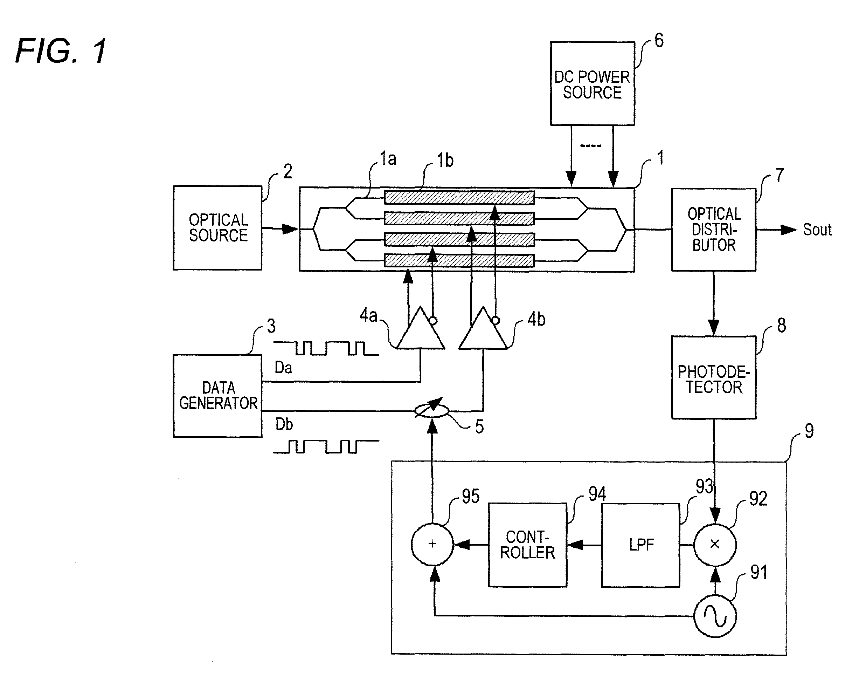

Hereinafter, the optical transmission apparatus of the invention will be described with reference to the drawings. Fig. 1 is a block diagram showing an embodiment of the invention. In the figure, components common with Fig. 6 are denoted by the same reference numerals. The configuration of Fig. 1 is different from that of Fig. 6 in that a phase synchronization loop configured by an optical distributor 7, a photodetector 8, and a synchronous detection circuit 9 is connected to the phase shifter 5.

Light from the optical source 2 is incident on the optical waveguides 1a of the MZ modulator 1. The one data Da output from the data generator 3 is input into the data amplifier 4a, and the other data Db is input into the data amplifier 4b via the phase shifter 5 in which the phase of the data is adjusted. The data are amplified to an adequate amplitude voltage, and then applied to the electrodes 1b which are disposed on the upper faces of the optical waveguides 1a of the MZ modulator 1.

Predetermined voltages from the DC power source 6 are applied to the electrodes (not shown) which are formed on the upper face of the combining portion of the MZ modulator 1, respectively, thereby modulating the intensity of the light. A light signal in which the light intensity is modulated by the MZ modulator 1 is input into the optical distributor 7 to be split into the signal Sout to be output to the outside, and a signal to be input into the photodetector 8.

In Fig. 1, for example, a configuration where the electrical length is mechanically changed by a motor or the like to control the phase, or where a voltage is applied to a device that is configured by a varactor diode or the like, and that varies a delay time, to generate a delay time, and a delay of the electrical phase is used is employed as the phase shifter 5. In the case where an emitter follower circuit is used in the output stage of the data generator, the power source voltage of the emitter follower circuit may be changed to vary the delay time. When an adequate control voltage from the synchronous detection circuit 9 constituting the phase synchronization loop is applied to the phase shifter 5 by such means as described later, a skew between transmission lines can be eliminated, and the transmission quality can be maintained.

Namely, a low-frequency dither from a dither generating source 91 is superimposed on the electric signal output from the data generator, by the phase shifter 5, and the signal is then applied to the MZ modulator. The continuous light from the optical source 2 is subjected to lightwave modulation by the MZ modulator. A weak dither is superimposed on the lightwave modulation signal by the phase shifter 5. The dither is split by the optical distributor 7, photoelectrically converted by the photodetector 8, and then input into the synchronous detection circuit 9. When a weak dither is applied to the phase shifter 5, an envelope curve appears in the light modulated output. The envelope curve is converted from light to an electric signal by the photodetector 8.

The synchronous detection circuit 9 is configured by the low-frequency dither generating source 91, a mixer 92, a low-pass filter (LPF) 93, a controller 94, and an adder 95.

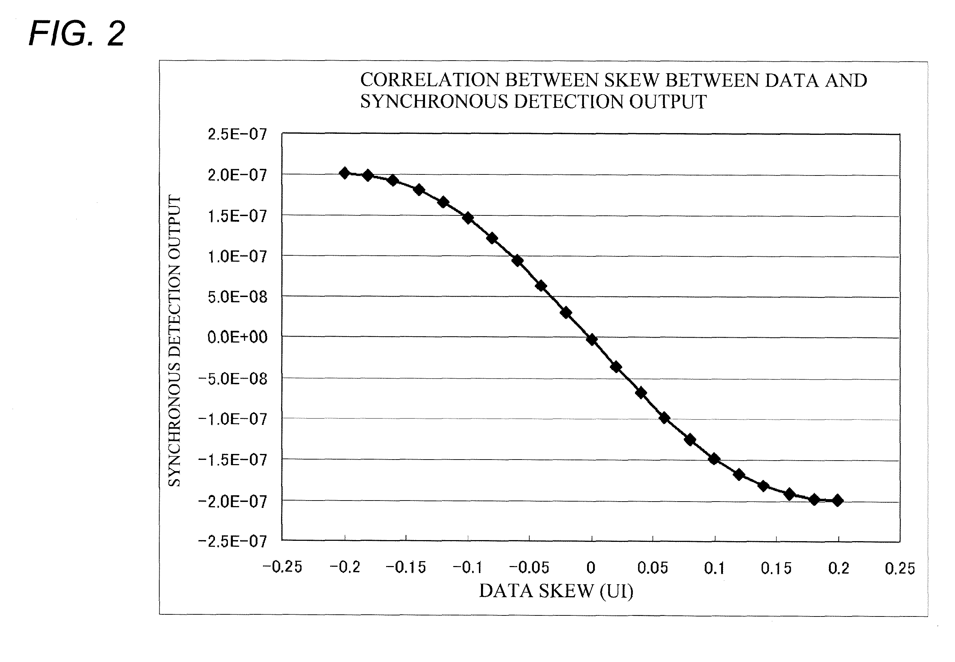

In the synchronous detection circuit 9, the signal which is photoelectrically converted by the photodetector 8 is multiplied with the low-frequency dither by the mixer 92, and the output signal of the mixer 92 is input into the controller 94 as a synchronous detection output, via the LPF 93. Based on the obtained synchronous detection output, the controller 94 applies an optimum control voltage to the phase shifter 5 via the adder 95. Also the low-frequency dither is input from the dither generating source 91 into the adder 95. The adequate phase voltage means a voltage at a point where, in a correlation chart of the synchronous detection output and a skew between data shown in Fig. 2, the synchronous detection output is "0".

Namely, the control signal of the controller 94 controls the phase shifter 5 so that the synchronous-detected value output from the low-pass filter 93 is "0".

The adequate control voltage from the controller 94 in the synchronous detection circuit 9 is applied to the phase shifter 5, and therefore a skew between the transmission lines can be eliminated, and the transmission quality of the optical transmission apparatus can be maintained.

Although not shown in Fig. 1, in the synchronous detection circuit 9, a phase shifter is connected between the low-frequency dither generating source 91 and the mixer 92, and adjusted so that the mixer output is obtained at the maximum value. Furthermore, for example, amplifying means such as a trans-impedance amplifier is connected between the photodetector 8 and the mixer 92 to amplify the input to the mixer 92 to an adequate signal level.

The light signal which is split by the optical distributor 7 to be input into the photodetector 8 is photoelectrically converted. The electric signal which is photoelectrically converted is input into the synchronous detection circuit 9, and the skew between the two data Da, Db output from the data generator 3 is made constant.

In the low-frequency dither generating source 91, usually, a sinusoidal wave is used, or alternatively a rectangular wave may be used. The optical distributor 7 and the photodetector 8 may be mounted in the MZ modulator 1.

As described above, the phase synchronization loop that applies the control voltage onto which the dither signal is superimposed, to the phase shifter 5, and that performs the synchronous detection is disposed, whereby it is possible to immediately cope with the situation that a skew is generated between the modulation data to be applied to the MZ modulator 1. Therefore, the skew adjusting time can be remarkably shortened as compared with the related art, and the transmission quality can be always maintained constant.

When a part of the phase synchronization loop is formed by, for example, an FPGA (Field Programmable Gate Array) or an ASIC (Application Specific Integrated Circuit), the optical transmission apparatus can be miniaturized, and the power consumption can be reduced.

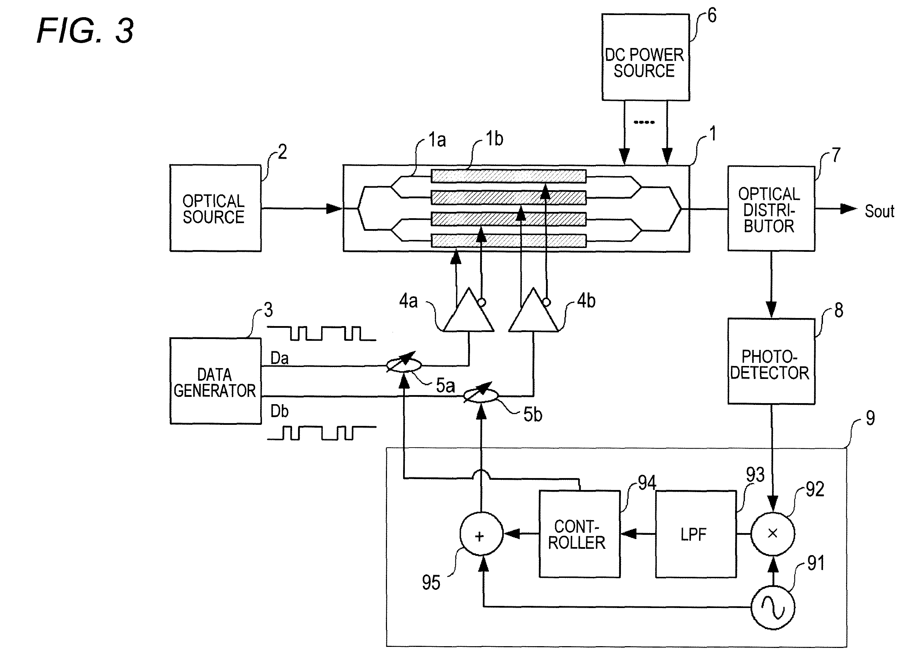

Fig. 3 is a block diagram showing another embodiment of the invention. In the figure, components common with Fig. 1 are denoted by the same reference numerals. The configuration of Fig. 3 is different from that of Fig. 1 in that the data Da, Db output from the data generator 3 are transmitted to the data amplifiers 4a, 4b via phase shifters 5a, 5b, respectively, and that the control voltage of the controller 94 on which the low-frequency dither is superimposed is input into the one phase shifter 5b via the adder 95, and the control voltage of the controller 94 in the synchronous detection circuit 9 is input into the other phase shifter 5a directly or without superimposing the low-frequency dither on the control voltage.

In the synchronous detection circuit 9, the signal which is photoelectrically converted is multiplied with the signal output from the low-frequency dither generating source 91 by the mixer 92, and the output signal of the mixer 92 is input into the controller 94 as a synchronous detection output, via the low-pass filter 93 in order to prevent a transient response from occurring. Based on the obtained synchronous detection output from the low-pass filter 93, the optimum control voltage output from the low-pass filter 93, and the low-frequency dither signal output from the low-frequency dither generating source 91 are added to each other by the adder 95, so that the optimum control voltage on which the low-frequency dither signal is superimposed is applied to the phase shifter 5b. The controller 94 directly applies the optimum control voltage to the other phase shifter 5a.

In the configuration, an optimum control voltage from the controller 94 in the synchronous detection circuit 9 is applied to the phase shifters 5a, 5b, and hence the transmission quality can be maintained.

The phase shifters 5a, 5b are instructed to operate in the following various methods, by the controller 94:

a) a method in which both the phase shifters 5a, 5b advance the respective phases;
b) a method in which the data phase of one of the data Da, Db output from the data generator 3 is advanced;
c) a method in which the phases of both the data Da, Db output from the data generator 3 are retarded;
d) a method in which the phases of both the data Da, Db output from the data generator 3 are retarded, and the phase of one of them is advanced;
e) a method in which the phases of the data Da, Db output from the data generator 3 are advanced in respective opposite directions; and
f) a method in which the phases of the data Da, Db output from the data generator 3 are retarded in respective opposite directions, and the phase of one of them is advanced.

In the method in which the data Da, Db output from the data generator 3 are advanced in respective opposite directions, for example, the operation speed can be improved, and the phase control region can be widened.

In the case other than the method in which the data Da, Db output from the data generator 3 are advanced in respective opposite directions, the phase control region can be widened.

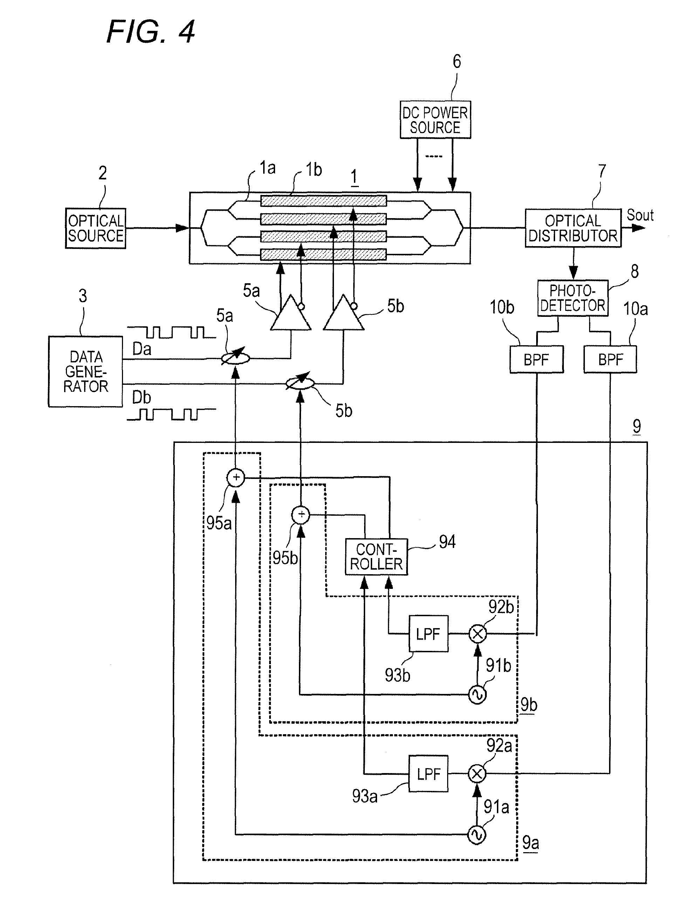

Fig. 4 is a block diagram showing a further embodiment of the invention. In the figure, components common with Fig. 3 are denoted by the same reference numerals. The configuration of Fig. 4 is different from that of Fig. 3 in that two synchronization detection circuits 9a, 9b are included in the synchronization detection circuit 9, that a dither is superimposed on both the phase shifters 5a, 5b, and that band-pass filters (BPFs) 10a, 10b the number of which is equal to that of the synchronization detection circuits 9a, 9b are disposed between the photodetector 8 and the synchronization detection circuit 9. The basic operation is identical with that of Fig. 3.

The signal which is photoelectrically converted by the photodetector 8 is input into the band-pass filters 10a, 10b, so that only frequencies coincident with frequency ranges which are set in the respective closed loops are passed through the filters, and then input into mixers 92a, 92b in the synchronization detection circuit 9 corresponding to the respective band-pass filters 10a, 10b.

The two synchronization detection circuits 9a, 9b make the skew of the data Da, Db output from the data generator 3 constant, apply respective optimum control voltages to the phase shifters 5a, 5b, and superimpose respective low-frequency dither signals on the phase shifters 5a, 5b via adders 95a, 95b.

Namely, the signals which are photoelectrically converted by the photodetector 8, and the signals output from low-frequency dither generating sources 91a, 91b are multiplied with each other in the respective mixers 92a, 92b. Then, the resulting signals are input into the controller 94 as synchronous detection outputs, via low-pass filters 93a, 93b in order to prevent a transient response from occurring.

Based on the respective obtained synchronous detection outputs from the low-pass filters 93a, 93b, the controller 94 supplies the optimum control voltages output from the low-pass filters 93a, 93b, to one input terminals of the adders 95a, 95b. The low-frequency dither signals output from the low-frequency dither generating sources 91a, 91b are supplied to the other input terminals of the adders 95a, 95b. The optimum control voltages output from the low-pass filters 93a, 93b, and the low-frequency dither signals are added to each other by the adders 95a, 95b, respectively, and the optimum control voltages on which the low-frequency dither signals are respectively superimposed are applied to the phase shifters 5a, 5b, respectively.

Since the adequate control voltages from the controller 94 in the synchronization detection circuit 9 are applied to the phase shifters 5a, 5b, the transmission quality can be maintained.

Dithers are superimposed on both the phase shifters 5a, 5b. The dither frequencies are set to values which are not integer multiples of the respective counter frequencies. When the dither signals are to be applied, the application may be controlled in a time-division manner.

The band-pass filters 10a, 10b allow only frequencies coincident with frequency ranges which are set in the respective closed loops, to pass through the filters, under the conditions that they are not affected by the respective other dither frequencies.

In the case where the same dither frequency is input into the phase shifters 5a, 5b, the application may be performed in a time-division manner, and only one of the synchronization detection circuits 9a, 9b may be used.

The embodiment can achieve the same effects as the embodiment of Fig. 3. Namely, when the data Da, Db output from the data generator 3 are advanced in respective opposite directions, the operation speed can be improved, and the phase control region can be widened.

In the case other than the method in which the data Da, Db output from the data generator 3 are advanced in respective opposite directions, the phase control region can be widened.

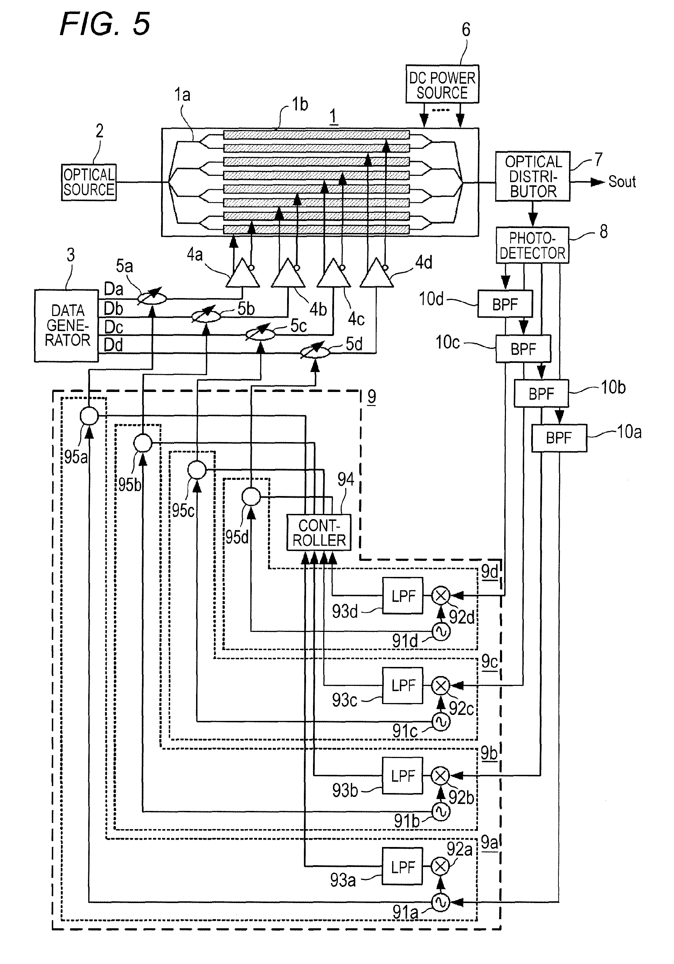

Fig. 5 is a block diagram showing a configuration example of a 16QAM (Quadrature Amplitude Modulation) which is a still further embodiment of the invention. In the figure, components common with Fig. 3 are denoted by the same reference numerals. The configuration of Fig. 5 is different from that of Fig. 3 in that four synchronization detection circuits 9a to 9d are included in the synchronization detection circuit 9, that the data generator 3 outputs data Da, Db, Dc, Dd, that low-frequency dither signals are superimposed on phase shifters 5a to 5d, respectively, and that band-pass filters (BPFs) 10a to 10d the number of which is equal to that of the synchronization detection circuits 9a to 9d are disposed between the photodetector 8 and the synchronization detection circuit 9.

The signal which is photoelectrically converted by the photodetector 8 is input into the band-pass filters 10a to 10d, so that only frequencies coincident with frequency ranges which are set in the respective closed loops are passed through the filters, and then input into mixers 92a to 92d in the synchronization detection circuit 9 corresponding to the respective band-pass filters 10a to 10d.

The four synchronization detection circuits 9a to 9d make the skew of the data Da to Dd output from the data generator 3 constant, apply respective optimum control voltages to the phase shifters 5a to 5d, and superimpose respective low-frequency dither signals on the phase shifters 5a to 5d.

Namely, the signals which are photoelectrically converted by the photodetector 8, and the signals output from low-frequency dither generating sources 91a to 9 1 d are multiplied with each other in the mixers 92a to 92d, respectively. Then, the resulting signals are input into the controller 94 as synchronous detection outputs, via low-pass filters 93a to 93d in order to prevent a transient response from occurring.

Based on the obtained synchronous detection outputs from the low-pass filters 93a to 93d, the controller 94 supplies the optimum control voltages output from the low-pass filters 93a to 93d, to one input terminals of the adders 95a to 95d. The low-frequency dither signals output from the low-frequency dither generating sources 91a to 91d are supplied to the other input terminals of the adders 95a to 95d. The optimum control voltages output from the low-pass filters 93a to 93d, and the low-frequency dither signals are added to each other by the adders 95a to 95d, respectively, and the optimum control voltages on which the low-frequency dither signals are respectively superimposed are applied to the phase shifters 5a to 5d, respectively.

Dithers are superimposed on the phase shifters 5a to 5d. The dither frequencies are set to values which are not integer multiples of the respective counter frequencies, with respect to relationships between the data Da and Db, and between the data Dc and Dd. When the dither signals are to be applied, the application may be controlled in a time-division manner.

The band-pass filters 10a to 10d allow only frequencies coincident with frequency ranges which are set in the respective closed loops, to pass through the filters, under the conditions that the band-pass filters 10a to 10d are not affected by the other dither frequencies.

In the case where the same dither frequency is input into the phase shifters 5a to 5d, the application is performed in a time-division manner, and only three of the synchronization detection circuits 9a to 9d are used.

In Fig. 5, in the case where one of the phase shifters 5a to 5d is omitted, the data of the omitted one of the phase shifters 5a to 5d may be set as phase reference data.

The embodiment can achieve the same effects as the embodiments of Figs. 3 and 4. Namely, when the two data Da, Db, and two data Dc, Dd output from the data generator 3 are advanced in respective opposite directions, the operation speed can be improved, and the phase control region can be widened.

In the case other than the method in which two signals output from the data generator 3 are advanced in respective opposite directions, the phase control region can be widened.

As described above, according to the invention, it is possible to realize an optical transmission apparatus in which a skew is always monitored, and, when a skew is generated, the skew can be immediately eliminated. Therefore, the skew adjusting time can be remarkably shortened as compared with the related art, and the transmission quality can be always maintained constant.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

**Claims**

1. An optical transmission apparatus comprising:

    a Mach-Zehnder modulator;
    transmission lines which transmit modulation data to said Mach-Zehnder modulator;
    a phase varying section which is connected to at least one of said transmission lines; and
    a phase synchronization loop which is connected to said phase varying section, and which applies a control voltage on which a dither signal is superimposed to said phase varying section, wherein said phase varying section adjusts a skew between said transmission lines to remain constant, based on the control voltage on which the dither signal is superimposed.

2. An optical transmission apparatus according to claim 1, wherein
    said phase synchronization loop has
    a dither generating source which generates a dither signal,
    a mixer which multiples the dither signal output from said dither generating source with a signal that is phase-adjusted and photoelectrically converted,
    a frequency detector which detects an arbitrary frequency band signal from an output signal from said mixer,
    a controller which receives a synchronous detection output from said frequency detector, and which changes a control signal on the basis of a value which is synchronous-detected; and
    an adder which adds the control voltage output from said controller, to the dither signal.

3. An optical transmission apparatus according to claim 1 or 2, wherein phase varying sections are connected respectively to said transmission lines.

4. An optical transmission apparatus according to any one of claims 1 to 3, wherein a part of said phase synchronization loop is formed by an FPGA or an ASIC.

5. An optical transmission apparatus according to claim 1, wherein said phase varying section is controlled so that a synchronous-detected value is "0".

FIG. 1

FIG. 2

CORRELATION BETWEEN SKEW BETWEEN DATA AND
SYNCHRONOUS DETECTION OUTPUT

EP 2 192 705 A1

*FIG. 3*

# FIG. 4

## FIG. 5

# FIG. 6

Europäisches
Patentamt
European
Patent Office
Office européen
des brevets

# EUROPEAN SEARCH REPORT

Application Number

EP 09 17 6996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2007/088636 A1 (FUJITSU LTD [JP]; TAKAHARA TOMOO [JP]; HOSHIDA TAKESHI [JP]; NAKASHIMA) 9 August 2007 (2007-08-09) * the whole document * | 1-5 | INV. H04B10/155 |
| A,P | -& US 2008/297270 A1 (TAKAHARA TOMOO [JP] ET AL) 4 December 2008 (2008-12-04) * figures 10, 15 * * paragraph [0050] * * paragraph [0051] * * paragraph [0054] * * paragraphs [0070] - [0072] * ----- | 1-5 | |
| A | US 2006/263098 A1 (AKIYAMA YUICHI [JP] ET AL) 23 November 2006 (2006-11-23) * figure 19 * * paragraph [0165] - paragraph [0166] * | 1-5 | |
| A,D | -& JP 2007 043638 A (FUJITSU LTD) 15 February 2007 (2007-02-15) ----- | 1-5 | |
| A | US 2007/264028 A1 (YUKI MASAHIRO [JP] ET AL) 15 November 2007 (2007-11-15) * figures 1,8,10 * * paragraph [0002] * * paragraphs [0065] - [0069] * ----- | 1-5 | TECHNICAL FIELDS SEARCHED (IPC) H04B |
| A | JP 03 251815 A (FUJITSU LTD) 11 November 1991 (1991-11-11) * abstract * ----- | 1-5 | |

The present search report has been drawn up for all claims

| Place of search | Date of completion of the search | Examiner |
|---|---|---|
| Munich | 23 February 2010 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 192 705 A1**

## ANNEX TO THE EUROPEAN SEARCH REPORT
## ON EUROPEAN PATENT APPLICATION NO.

EP 09 17 6996

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2010

| Patent document cited in search report | | | Publication date | Patent family member(s) | | Publication date |
|---|---|---|---|---|---|---|
| WO 2007088636 | A1 | | 09-08-2007 | US | 2008297270 A1 | 04-12-2008 |
| US 2008297270 | A1 | | 04-12-2008 | WO | 2007088636 A1 | 09-08-2007 |
| US 2006263098 | A1 | | 23-11-2006 | EP | 1727303 A2 | 29-11-2006 |
| | | | | EP | 2110972 A1 | 21-10-2009 |
| | | | | EP | 2003797 A1 | 17-12-2008 |
| | | | | EP | 2001148 A1 | 10-12-2008 |
| | | | | EP | 2114025 A1 | 04-11-2009 |
| | | | | JP | 2007043638 A | 15-02-2007 |
| JP 2007043638 | A | | 15-02-2007 | EP | 1727303 A2 | 29-11-2006 |
| | | | | EP | 2110972 A1 | 21-10-2009 |
| | | | | EP | 2003797 A1 | 17-12-2008 |
| | | | | EP | 2001148 A1 | 10-12-2008 |
| | | | | EP | 2114025 A1 | 04-11-2009 |
| | | | | US | 2006263098 A1 | 23-11-2006 |
| US 2007264028 | A1 | | 15-11-2007 | JP | 2007329886 A | 20-12-2007 |
| JP 3251815 | A | | 11-11-1991 | JP | 2642499 B2 | 20-08-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007043638 A